(19)

Europäisches Patentamt

European Patent Office

Office européen des brevets

(11) **EP 2 826 606 A1**

(12) **EUROPEAN PATENT APPLICATION**
published in accordance with Art. 153(4) EPC

(43) Date of publication:
**21.01.2015 Bulletin 2015/04**

(21) Application number: **12871093.6**

(22) Date of filing: **22.11.2012**

(51) Int Cl.:
**B25J 13/08** (2006.01)

(86) International application number:
**PCT/JP2012/080373**

(87) International publication number:
**WO 2013/136599 (19.09.2013 Gazette 2013/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.03.2012 JP 2012058499**

(71) Applicant: **Olympus Medical Systems Corp.
Tokyo 151-0072 (JP)**

(72) Inventors:
• **KAWAI, Toshimasa
  Hachioji-shi
  Tokyo 192-8512 (JP)**
• **UMEMOTO, Yoshitaka
  Hachioji-shi
  Tokyo 192-8512 (JP)**

(74) Representative: **Schicker, Silvia
  Wuesthoff & Wuesthoff
  Patent- und Rechtsanwälte
  Schweigerstrasse 2
  81541 München (DE)**

(54) **MANIPULATOR DEVICE**

(57)      A manipulator device includes a state detection section detecting, with time, at least one of a vibration state of a distal arm and a load state of the distal arm and generating a detection signal indicating at least one of the vibration state and the load state of the distal arm. The manipulator device includes a servo gain changing section changing a servo gain of a drive current with respect to a drive instruction in a servo control section in accordance with the detection signal generated by the state detection section and changing the servo gain so as to change frequency characteristics associated with the vibrations of the distal arm in real time in accordance with the vibration state or the load state of the distal arm.

F I G. 5

EP 2 826 606 A1

**Description**

Technical Field

The present invention relates to a manipulator device in which a distal arm moved (acted) by driving a driving member is provided at a distal end portion of a manipulator.

Background Art

Patent Literature 1 has disclosed a manipulator device used in, for example, an inspection in a nuclear reactor. This manipulator device includes a manipulator to be inserted into the nuclear reactor. The manipulator includes an arm (distal arm). The arm includes three joints, and three bars (links) each of which is extended in a part located to a distal direction side of the corresponding joint. A spherical ultrasonic motor which is a driving member is provided inside each of the joints. A drive instruction of each spherical ultrasonic motor is generated in accordance with an operational instruction in an operational instruction input section located outside the nuclear reactor, and each spherical ultrasonic motor is driven in accordance with the corresponding drive instruction. When each spherical ultrasonic motor is driven, the corresponding joint is activated, and a part located to the distal direction side of the corresponding joint is moved (acted).

In the manipulator device according to Patent Literature 1, each spherical ultrasonic motor includes a stator, and a rotor. In each spherical ultrasonic motor, driving characteristics such as a driving speed change in accordance with a press force from the stator to the rotor. In each joint, an exerted force changes in accordance with, for example, changes in a posture of the arm (manipulator). The press force from the stator to the rotor in each spherical ultrasonic motor changes depending on the exerted force which is exerted on the corresponding joint.

Accordingly, in the manipulator device according to Patent Literature 1, a position-and-posture detection section is provided to detect the position and the posture of each joint. The force which is exerted on each joint is calculated in accordance with the position and posture of the joint. An electromagnet or a shape-memory alloy spring is provided to (in) each joint. In each joint, the press force from the stator to the rotor is adjusted by changing a voltage to be applied to the electromagnet or by changing a current to be supplied to the shape-memory alloy spring. The voltage to be applied to the electromagnet and the current to be supplied to the shape-memory alloy spring are controlled in accordance with the calculation result of the force which is exerted on each joint. As described above, in each joint, the press force from the stator to the rotor is adjusted in accordance with the calculation result of the exerted force, and rigidity is adjusted.

Citation List

Patent Literature

Patent Literature 1: Jpn. Pat. Appln. KOKAI Publication No. 2011-182485

Summary of Invention

Technical Problem

When the manipulator device is in use, the arm (manipulator) may vibrate by an action of external force. Particularly in a medical manipulator device in which a manipulator is inserted into an inside of a body, when vibrations are generated in the distal arm (manipulator), the vibrations need to be quickly inhibited (damped) from the viewpoint of preventing the deterioration of treatment performance. In the manipulator device according to Patent Literature 1, rigidity is adjusted in each joint in accordance with the exerted force. However, the generated vibrations are not always quickly inhibited merely by changing the rigidity of each joint.

The present invention has been made in view of the problems described above, and an object of the present invention is to provide a manipulator device capable of quickly inhibiting (damping) vibrations if the vibrations are generated in a distal arm of a manipulator which moves (acts).

Solution to Problem

To solve above mentioned problems, according to one aspect of the invention, a manipulator device includes that: a manipulator extended along a longitudinal axis, the manipulator including a distal arm movably provided at a distal end portion thereof, the distal arm including a distal functioning section at a distal end portion thereof; an operational instruction input section to which an operational instruction indicating a target position and a target posture of the distal functioning section is configured to be input; a driving member which is configured to be driven when a drive current is supplied thereto, and which is configured to move the distal arm when driven; a servo control section to which a drive instruction of the driving member is configured to be input in accordance with the operational instruction in the operational instruction input section, and which is configured to supply the drive current to the driving member in accordance with the drive instruction; a state detection section which is configured to detect, with time, at least one of a vibration state of the distal arm and a load state of the distal arm, and which is configured to generate a detection signal indicating at least one of the vibration state and the load state of the distal arm; and a servo gain changing section which is configured to change a servo gain of the drive current with respect to the drive instruction in the servo control section in accordance with the detection signal generated by the state detection section, the servo gain changing section being configured to change the servo gain so as to change frequency characteristics associated with the vibrations of the distal arm in real time in accordance with the vibration state or the load state of the distal arm.

Advantageous Effects of Invention

According to the present invention, a manipulator device, which is capable of quickly inhibiting (damping) vibrations if the vibrations are generated in a distal arm of a manipulator which moves (acts), can be provided.

Brief description of Drawings

FIG. 1 is a schematic diagram showing a manipulator device according to a first embodiment of the present invention;
FIG. 2 is a schematic diagram showing a configuration to actuate joints of a manipulator according to the first embodiment;
FIG. 3 is a schematic diagram illustrating a processing in a drive instruction generating section according to the first embodiment;
FIG. 4 is a schematic block diagram showing a configuration of one of servo control sections of the manipulator device according to the first embodiment;
FIG. 5 is a block diagram illustrating a processing in one of the servo control sections of the manipulator device according to the first embodiment, and in a motor and an encoder corresponding to the servo control section;
FIG. 6A is a schematic diagram showing a relation between a servo gain in one of the servo control sections of the manipulator device according to the first embodiment and frequency characteristics associated with the vibrations of the distal arm;
FIG. 6B is a schematic diagram showing a relation between a servo gain in one of the servo control sections of the manipulator device according to the first embodiment and the frequency characteristics associated with the vibrations of the distal arm when the manipulator and a body wall are one vibration system;
FIG. 7 is a schematic block diagram showing a configuration of a vibration detection section of one of the servo control sections of the manipulator device according to the first embodiment;
FIG. 8 is a schematic diagram showing, with time, a processing in the vibration detection section of one of the servo control sections of the manipulator device according to the first embodiment;
FIG. 9 is a schematic diagram illustrating a processing in a correlation data calculating section of the vibration detection section according to the first embodiment;
FIG. 10 is a schematic diagram showing the relation between a correlation data calculated by the correlation data calculating section of the vibration detection section according to the first embodiment and a servo gain in one of the servo control sections;
FIG. 11 is a schematic diagram showing a distal arm of a manipulator device according to a second embodiment of the present invention;
FIG. 12 is a schematic block diagram showing a configuration to actuate joints and a grasping portion of a manipulator according to the second embodiment; and
FIG. 13 is a block diagram illustrating a processing in one of servo control sections of the manipulator device according to the second embodiment, in a motor and an encoder corresponding to the servo control section, and in a load detection section.

Description of Embodiments

(First Embodiment)

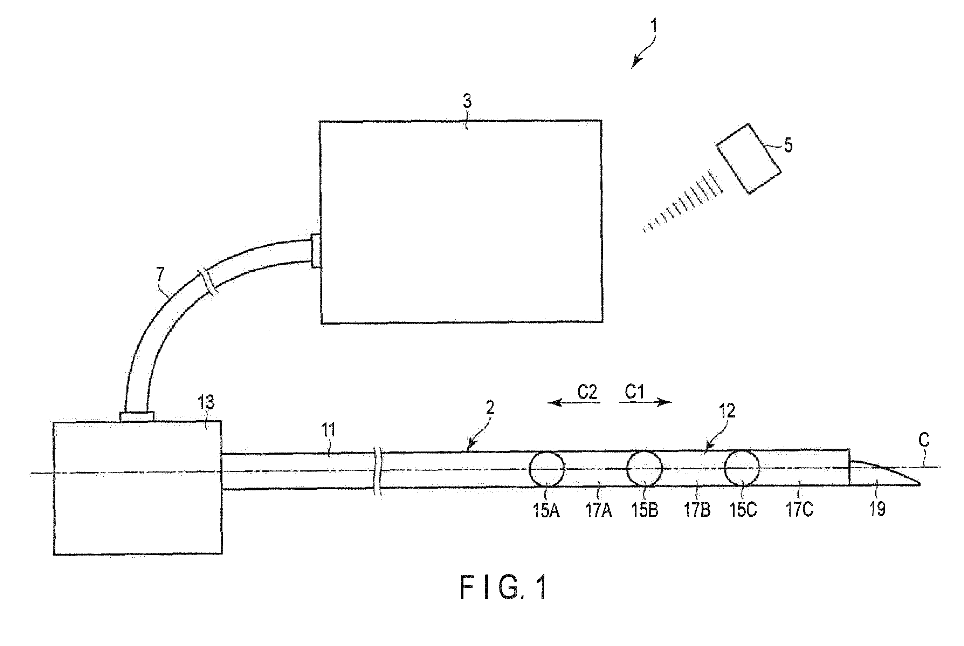

A first embodiment of the present invention is described with reference to FIG. 1 to FIG. 10. FIG. 1 is a diagram showing a manipulator device 1. The manipulator device 1 is a medical manipulator device used in, for example, a medical treatment (surgical treatment). As shown in FIG. 1, the manipulator device 1 includes a manipulator 2, a control unit 3, and an operational instruction input section 5 such as a 3D digitizer.

The manipulator 2 has a longitudinal axis C, and is extended along the longitudinal axis C. Here, one of directions parallel to the longitudinal axis C is a distal direction (direction of an arrow C1 in FIG. 1), and the other of the directions parallel to the longitudinal axis C is a proximal direction (direction of an arrow C2 in FIG. 1). The manipulator 2 includes an elongated tubular section 11 extended along the longitudinal axis C, and a distal arm 12 provided to the distal direction side of the tubular section 11. The distal arm 12 is located at a distal end portion of the manipulator 2, and is movably (actably) provided. A holding section 13 is provided to the proximal direction side of the tubular section 11. One end of a universal cord 7 is connected to the holding section 13. The other end of the universal cord 7 is connected to the control unit 3. The control unit 3 can receive an operational instruction from the operational instruction input section 5 by wireless communication.

The distal arm 12 includes a plurality of (three in the present embodiment) joints 15A to 15C, and a plurality of (three in the present embodiment) links 17A to 17C. Each of the links 17A to 17C is extended in a part located to the distal direction side of the corresponding joint 15A, 15B or 15C. A scalpel (knife) 19 which is a distal treatment section (distal functioning section) is provided to the distal direction side of the link 17C. That is, the scalpel 19 is located at the distal end portion of the distal arm 12, and is located to the distal direction side of the joint 15C which located on the most distal direction sides among the joints 15A to 15C. When each of the joints 15A to 15C is actuated, a part of the distal arm 12 located to the distal direction side of the actuated joint (15A, 15B or 15C) is rotated about the actuated joint (15A, 15B or 15C). A treatment target such as a living tissue is cut (cut open) with the scalpel 19, and the treatment target is treated.

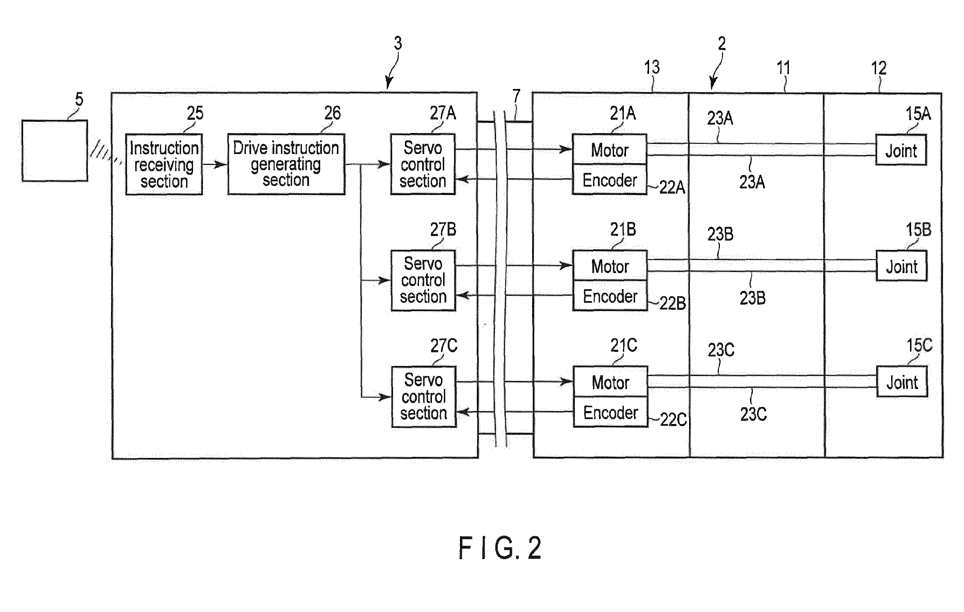

FIG. 2 is a diagram showing the configuration to actuate the joints 15A to 15C. As shown in FIG. 2, motors 21A to 21C which are driving members, and encoders 22A to 22C are provided to (in) the holding section 13 of the manipulator 2. Each of the encoders 22A to 22C detect a driving state (driving position) of the corresponding motor 21A, 21B or 21C. The motors 21A to 21C and the encoders 22A to 22C are located to the proximal direction side of a proximal end of the distal arm 12.

Inside the manipulator 2, wires 23A to 23C which are linear members are extended along the longitudinal axis C. Each pair of the respective wires 23A to 23C are extended between the corresponding motor 21A, 21B or 21C and the distal arm 12. The distal ends of each pair of the wires 23A to 23C are connected to the corresponding joint 15A, 15B or 15C. Each pair of the wires 23A to 23C move along the longitudinal axis C in accordance with the driving state of the corresponding motor 21A, 21B or 21C. The corresponding joint 15A, 15B or 15C is actuated by the movements of each pair of the wires 23A to 23C along the longitudinal axis C. As a result, the distal arm 12 moves (acts).

As shown in FIG. 2, the control unit 3 includes an instruction receiving section 25 which is configured to receive the operational instruction in the operational instruction input section 5 by wireless communication. The instruction receiving section 25 is electrically connected to a drive instruction generating section 26 provided in (to) the control unit 3. The drive instruction generating section 26 is configured to detect target position data and target posture data regarding the scalpel 19 (distal treatment section) included in the operational instruction by the operational instruction input section 5. That is, the operational instruction indicating a target position and a target posture of the scalpel 19 is input in the operational instruction input section 5. A drive instruction of each of the motors 21A to 21C is generated in accordance with the target position data and the target posture data regarding the scalpel 19 included in the operational instruction.

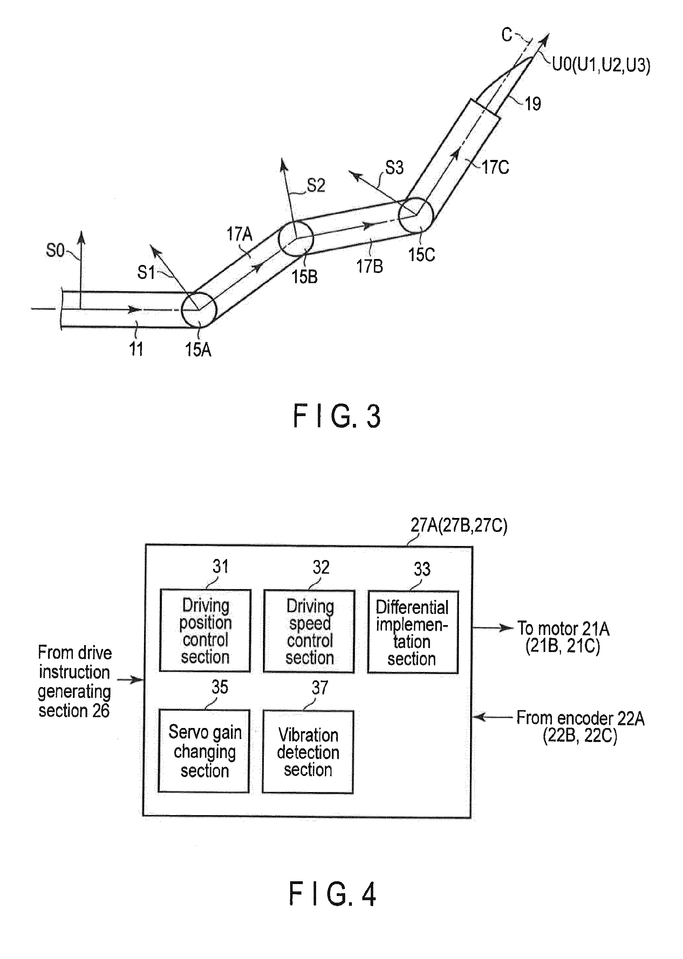

FIG. 3 is a diagram illustrating a processing in the drive instruction generating section 26. As shown in FIG. 3, the drive instruction generating section 26 is configured to calculate positions and postures of the joints 15A to 15C to bring the scalpel 19 into the target position and the target posture. A coordinate transformation based on a Denavit-Hartenberg method is used to calculate actuation states such as the bending angles of the joints 15A to 15C in the positions and postures of the joints 15A to 15C to bring the scalpel 19 into the target position and the target posture. Here, four coordinate systems S0 to S3 are defined. The coordinate system S0 has its origin in the tubular section 11, and directions parallel to the longitudinal axis C in the tubular section 11 correspond to axial directions of one axis. The coordinate system S1 has its origin in the joint 15A, and directions parallel to the longitudinal axis C in the link 17A correspond to axial directions of one axis. The coordinate system S2 has its origin in the joint 15B, and directions parallel to the longitudinal axis C in the link 17B correspond to axial directions of one axis. The coordinate system S3 has its origin in the joint 15C, and directions parallel to the longitudinal axis C in the link 17C correspond to axial directions of one axis.

A transformation matrix from the coordinate system S1 to the coordinate system S0 is $H(0\square1$ A transformation matrix from the coordinate system S2 to the coordinate system S1 is $H(1\square2)$. A transformation matrix from the coordinate system S3 to the coordinate system S2 is $H(2\square3)$. In this case, a position-and-posture vector U0 of the scalpel 19 (the distal end of the manipulator 2) in the coordinate system S0 is

$$U0=H(0\square1)\square U1=H(0\square1)\square H(1\square2)\square U2=H(0\square1)\square H(1\square2)\square H(2\square3)$$

$$\square U3 \quad (1)$$

wherein U1 is a position-and-posture vector of the scalpel 19 in the coordinate system S1, U2 is a position-and-posture vector of the scalpel 19 in the coordinate system S2, and U3 is a position-and-posture vector of the scalpel 19 in the coordinate system S3. The actuation state of the joint 15A in the positions and postures of the joints 15A to 15C to bring the scalpel 19 into the target position and the target posture is calculated in accordance with the transformation matrix H(0$\square$1). The actuation state of the joint 15B in the positions and postures of the joint 15A to 15C to bring the scalpel 19 into the target position and the target posture is calculated in accordance with the transformation matrix H(1$\square$2). The actuation state of the joint 15C in the positions and postures of the joint 15A to 15C to bring the scalpel 19 into the target position and the target posture is calculated in accordance with the transformation matrix H(2$\square$3). In this way, the actuation states of the joints 15A to 15C in the positions and postures of the joints 15A to 15C to bring the scalpel 19 into the target position and the target posture are calculated. In accordance with the calculation results, a drive instruction of the motor 21A, 21B or 21C corresponding to each of the joints 15A to 15C is generated.

The drive instruction generating section 26 is electrically connected to servo control sections 27A to 27C provided in (to) the control unit 3. The drive instruction of the corresponding motor 21A, 21B or 21C is input to each of the servo control sections 27A to 27C from the drive instruction generating section 26. Each of the servo control sections 27A to 27C is electrically connected to the corresponding motor 21A, 21B or 21C, and supply a drive current to the corresponding motor 21A, 21B or 21C in accordance with the drive instruction. The corresponding encoder 22A, 22B or 22C is also electrically connected to each of the servo control sections 27A to 27C. Thus, the driving state (driving position) of the corresponding motor 21A, 21B or 21C is fed back to each of the servo control sections 27A to 27C.

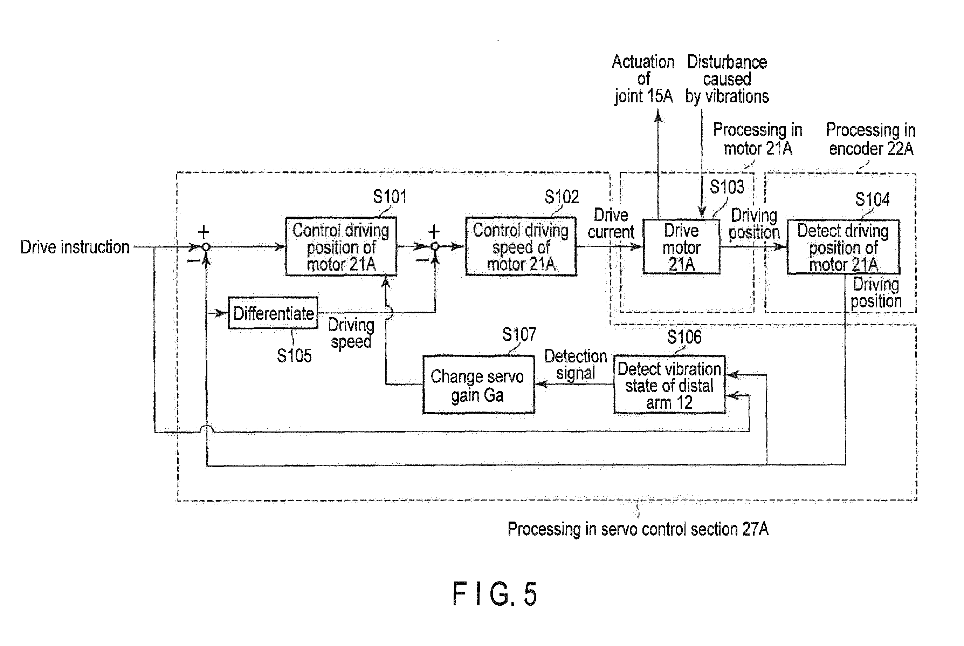

FIG. 4 is a schematic diagram showing a configuration of the servo control section 27A. FIG. 5 is a diagram illustrating a processing in the servo control section 27A, the motor 21A, and the encoder 22A. Although one servo control section 27A, and the motor 21A and the encoder 22A which correspond to the servo control section 27A are only described below, the servo control sections 27B and 27C, the motors 21B and 21C, and the encoders 22B and 22C are similar in configuration and processing to the servo control section 27A, the motor 21A, and the encoder 22A.

As shown in FIG. 4, the servo control section 27A includes a driving position control section 31 which is configured to control the driving position of the motor 21A, and a driving speed control section 32 which is configured to control the driving speed of the motor 21A. The servo control section 27A also includes a differential implementation section 33, a servo gain changing section 35, and a vibration detection section 37. Although the servo gain changing section 35 and the vibration detection section 37 are provided in (to) the servo control section 27A in the present embodiment, the servo gain changing section 35 and the vibration detection section 37 may be provided separately from the servo control section 27A.

As shown in FIG. 5, the drive instruction of the motor 21A from the drive instruction generating section 26 is input to the driving position control section 31. The driving position control section 31 is configured to control the driving position of the motor 21A in accordance with driving position data regarding the motor 21A included in the drive instruction (step S101). The drive instruction of the motor 21A is input to the driving speed control section 32. The driving speed control section 32 is configured to control the driving speed of the motor 21A in accordance with driving speed data regarding the motor 21A included in the drive instruction (step S102). The drive current is supplied to the motor 21A in accordance with the control of the driving position of the motor 21A in the driving position control section 31 and the control of the driving speed of the motor 21A in the driving speed control section 32.

When the drive current is supplied to the motor 21A, the motor 21A is driven (step S103). Thus, the joint 15A is actuated. At this moment, a vibration state of the distal arm 12 affects the driving of the motor 21A. During the use of the manipulator device 1, the distal arm 12 may vibrate due to, for example, external force. In this case, the vibrations of the distal arm 12 are exerted on the motor 21A as disturbance. Therefore, the drive instruction of the motor 21A and the actual driving state of the motor 21A may be less correlated with each other depending on the vibration state of the distal arm 12.

The actual driving position (driving state) of the motor 21A is detected by the encoder 22A (step S104). The detected driving position information regarding the motor 21A is fed back in the driving position control (step S101) of the motor 21A in the driving position control section 31. The driving position information regarding the motor 21A detected by the encoder 22A is input to the differential implementation section 33. The driving position information regarding the motor 21A is differentiated in the differential implementation section (step S105), and the actual driving speed of the motor 21A is detected (calculated). The detected driving speed information regarding the motor 21A is fed back in the driving speed control (step S102) of the motor 21A in the driving speed control section 32.

The drive instruction of the motor 21A is input to the vibration detection section 37. The driving position (driving state) information regarding the motor 21A detected by the encoder 22A is input to the vibration detection section 37. The vibration detection section 37 is configured to detect, with time, the vibration state of the distal arm 12 in accordance with the correlation between the drive instruction of the motor 21A and the driving state (driving position) of the motor 21A detected by the encoder 22A (step S106). At this moment, the frequency (f) of the vibrations is detected if the distal arm 12 is vibrating. The vibration detection section 37 is then configured to generate a detection signal indicating the vibration state of the distal arm 12. That is, the vibration detection section 37 is a state detection section which is configured to detect the vibration state of the distal arm 12. Details of the processing in the vibration detection section 37 will be described later.

The detection signal indicating the vibration state of the distal arm 12 is input to the servo gain changing section 35. The servo gain changing section 35 is configured to change a servo gain Ga of the drive current with respect to the drive instruction of the motor 21A in the servo control section 27A in accordance with the detection signal (step S107). Driving characteristics of the motor 21A with respect to (associated with) the drive instruction change in accordance with the change of the servo gain Ga. The actuation characteristics of the joint 15A change as a result of the change of the driving characteristics of the motor 21A. As the actuation characteristics of the joint 15A change, the actuation speed of the joint 15A varies between before and after the change, for example, even when the same drive instruction is input to the servo control section 27A. Moreover, as the actuation characteristics of the joint 15A change, the actuation speed of the joint 15A varies between before and after the change, for example, even when the same external force is exerted on the joint 15A.

The actuation characteristics of the joints 15B and 15C are similar to the actuation characteristics of the joint 15A. That is, the actuation characteristics of the joint 15B change if a servo gain Gb of the drive current with respect to the drive instruction of the motor 21B in the servo control section 27B is changed. The actuation characteristics of the joint 15C change if a servo gain Gc of the drive current with respect to the drive instruction of the motor 21C in the servo control section 27C is changed. The frequency characteristics associated with the vibrations of the distal arm 12 change if the actuation characteristics of at least one of the joints 15A to 15C change.

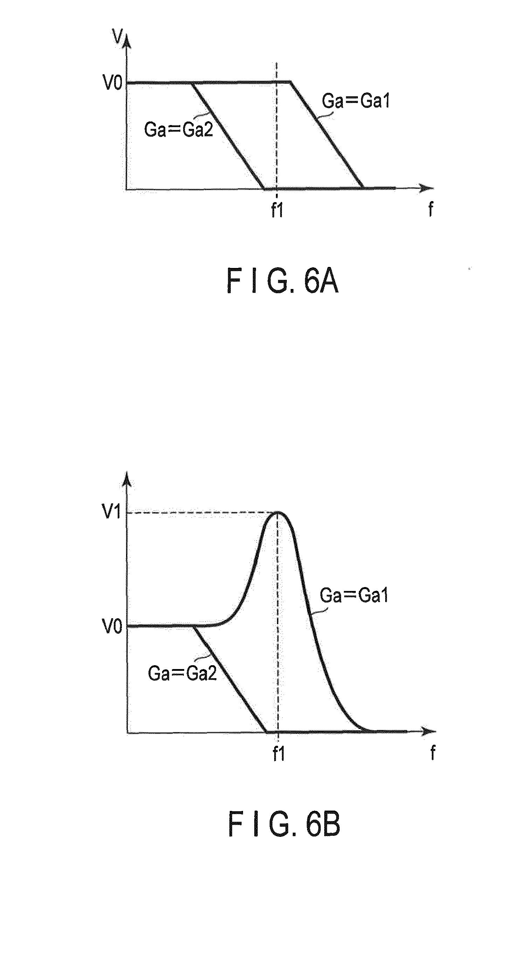

FIG. 6A is a diagram showing the relation between the servo gain Ga in the servo control section 27A and the frequency characteristics associated with the vibrations of the distal arm 12. FIG. 6B is a diagram showing the relation between the servo gain Ga in the servo control section 27A and the frequency characteristics associated with the vibrations of the distal arm 12 when the manipulator 2 and a body wall are one vibration system. Although the relation between the servo gain Ga of one servo control section 27A and the frequency characteristics of the distal arm 12 is only described below, the servo gain Gb or Gc of each of the servo control sections 27B and 27C is similar to the servo gain Ga of the servo control section 27A. In FIG. 6A and FIG. 6B, the vertical axis indicates amplitude (V), and the horizontal axis indicates frequency (f). The frequency characteristics of the distal arm 12 when the servo gain Ga is Ga1 and the frequency characteristics of the distal arm 12 when the servo gain Ga is Ga2 which is less than Ga1 are shown.

Here, the distal arm 12 has frequency characteristics associated with the vibrations shown in FIG. 6A when the distal arm 12 of the manipulator 2 moves in space without contacting the body wall or the like. Thus, the distal arm 12 is movable without generating vibrations regardless of the magnitude of the servo gain Ga. However, when the distal arm 12 of the manipulator 2 contacts the body wall or when the distal arm 12 is separated from the contacting body wall, the manipulator 2 and the body wall are regarded as one vibration system. Therefore, the distal arm 12 has frequency characteristics associated with the vibrations shown in FIG. 6B. Accordingly, the distal arm 12 vibrates with great amplitude VI at a frequency f1 when the servo gain Ga in the servo control section 27A is Gal. At this moment, the vibration detection section 37 detects the frequency f1 of the vibrations of the distal arm 12, and the detection signal including the vibration frequency data is input to the servo gain changing section 35.

The servo gain changing section 35 decreases the servo gain Ga in the servo control section 27A from Ga1 to Ga2 in accordance with the detection signal. As the servo gain Ga decreases, the actuation characteristics of the joint 15A change, and the joint 15A becomes flexible. As the joint 15A becomes flexible, the vibrations are absorbed by the joint 15A. Therefore, the servo gain Ga in the servo control section 27A is decreased from Ga1 to Ga2 so as to change the frequency characteristics of the distal arm 12 and inhibit (damp) the vibrations of the distal arm 12 (see FIG. 6B). That is, the servo gain changing section 35 is configured to change the servo gain Ga to Ga2, and thereby to change frequency characteristics associated with the vibrations of the distal arm 12 so that the vibrations at the frequency f1 detected by the vibration detection section 37 will be inhibited (damped).

As described above, the servo gain Ga in the servo control section 27A is changed in accordance with the vibration state of the distal arm 12 so as to change the frequency characteristics of the distal arm 12 and inhibit the generated vibrations. Therefore, the frequency characteristics of the distal arm 12 change in real time in accordance with the vibration state of the distal arm 12, and the vibrations generated in the distal arm 12 are quickly inhibited.

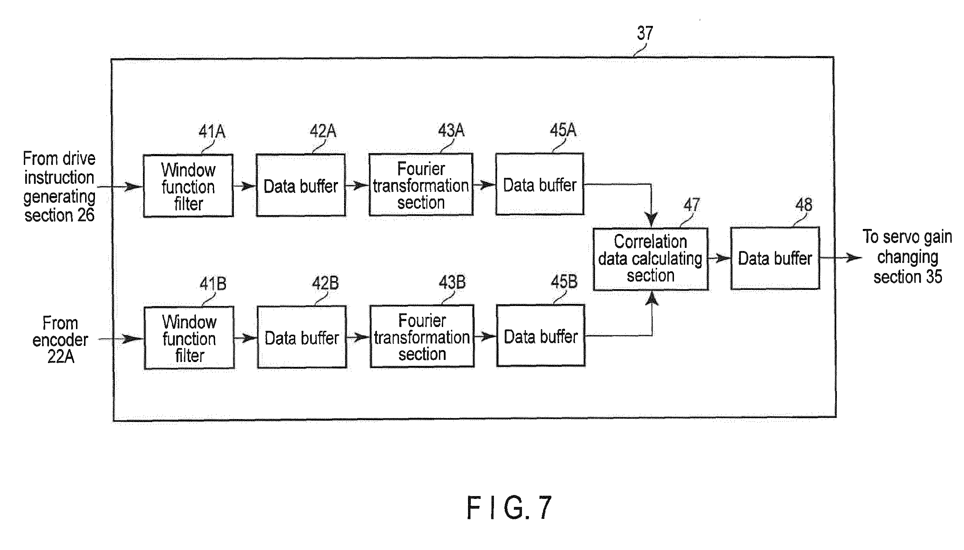

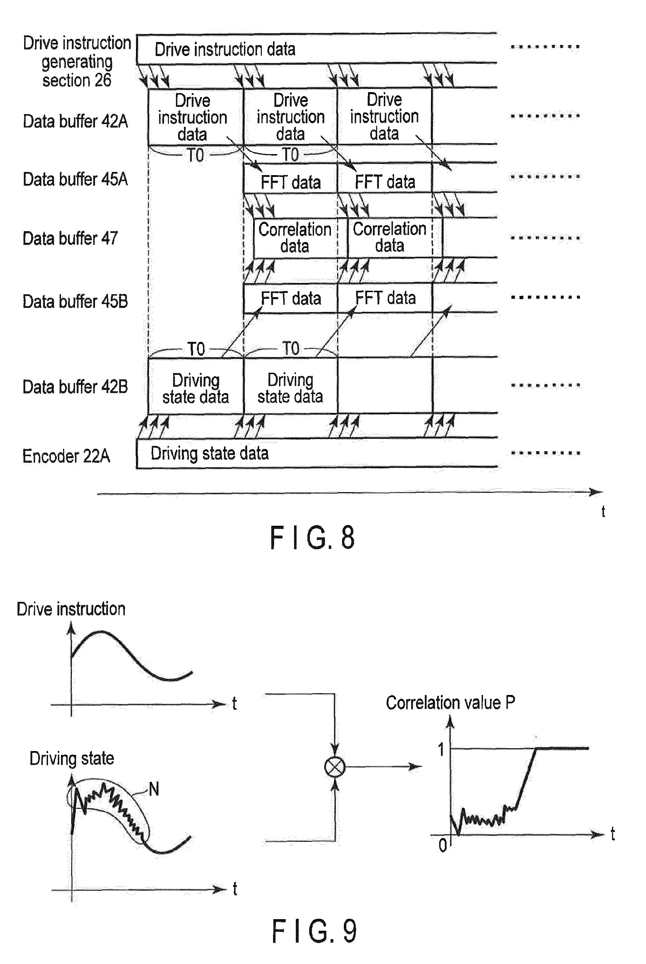

FIG. 7 is a diagram showing a configuration of the vibration detection section 37 of the servo control section 27A. FIG. 8 is a diagram showing, with time, a processing in the vibration detection section 37 of the servo control section 27A. Although the vibration detection section 37 of one servo control section 27A is described below by way of example, the vibration detection sections 37 of the servo control sections 27B and 27C are similar to the vibration detection section 37 of the servo control section 27A.

As shown in FIG. 7 and FIG. 8, the vibration detection section 37 includes a window function filter 41A to which the drive instruction of the motor 21A is input from the drive instruction generating section 26. The drive instruction data of the motor 21A is divided for each predetermined time range T0 by the window function filter 41A. The window function filter 41A is electrically connected to a data buffer 42A. The drive instruction data divided for each predetermined time range T0 is temporarily stored in the data buffer 42A. The drive instruction data is stored in the data buffer 42A with a storage being a slight time behind from the generation of the drive instruction in the drive instruction generating section 26.

The data buffer 42A is electrically connected to a Fourier transformation section 43A. In the Fourier transformation section 43A, fast Fourier transformation (FFT) of the drive instruction data of the motor 21A is conducted for each predetermined time range TO, and FFT data of the drive instruction of the motor 21A is generated in such a manner as to be divided for each predetermined time range T0. The Fourier transformation section 43A is electrically connected to a data buffer 45A. The FFT data divided for each predetermined time range T0 is temporarily stored in the data buffer 45A. The FFT data is stored in the data buffer 45A with a storage being a time equal to the predetermined time range T0 behind from the storage of the drive instruction data in the data buffer 42A.

The vibration detection section 37 includes a window function filter 41B to which the driving state (driving position) of the motor 21A is input from the encoder 22A. Driving state data of the motor 21A is divided for each predetermined time range T0 by the window function filter 41B. The window function filter 41B is electrically connected to a data buffer 42B. The driving state data divided for each predetermined time range T0 is temporarily stored in the data buffer 42B. The driving state data is stored in the data buffer 42B with a storage being a slight time behind from the detection of the driving state in the encoder 22A.

The data buffer 42B is electrically connected to a Fourier transformation section 43B. In the Fourier transformation section 43B, fast Fourier transformation of the driving state data of the motor 21A is conducted for each predetermined time range T0, and FFT data of the driving state of the motor 21A is generated in such a manner as to be divided for each predetermined time range T0. The Fourier transformation section 43B is electrically connected to a data buffer 45B. The FFT data divided for each predetermined time range T0 is temporarily stored in the data buffer 45B. The FFT data is stored in the data buffer 45B with a storage being a time equal to the predetermined time range T0 behind from the storage of the driving state data in the data buffer 42B.

The data buffer 45A and the data buffer 45B are electrically connected to a correlation data calculating section 47. The correlation data calculating section 47 is configured to calculate correlation data indicating the correlation between the drive instruction of the motor 21A and the driving state of the motor 21A detected in the encoder 22A, in accordance with the FFT data in the data buffer 45A and the FFT data in the data buffer 45B. The correlation data is calculated for each predetermined time range T0 with time. The correlation data calculating section 47 is electrically connected to a data buffer 48. The correlation data divided for each predetermined time range T0 is temporarily stored in the data buffer 48. The correlation data is stored in the data buffer 48 with a storage being a slight time behind from the storage of the FFT data in the data buffer 45A and the storage of the FFT data in the data buffer 45B.

As described above, the correlation data is calculated in the correlation data calculating section 47 with a calculation being a time substantially equal to the predetermined time range T0 behind from the detection of the driving state in the encoder 22A. Therefore, the predetermined time range T0 is reduced so that the correlation data indicating the correlation between the drive instruction of the motor 21A and the driving state of the motor 21A detected in the encoder 22A is calculated in real time in accordance with the vibration state of the distal arm 12.

FIG. 9 is a diagram illustrating a processing in the correlation data calculating section 47. Here, the correlation data is calculated by use of the processing of a known cross correlation function. That is, a data row of FFT data of the drive instruction stored in the data buffer 45A and a data row of FFT data of the driving state stored in the data buffer 45B are convolution-integrated. As shown in FIG. 9, when vibrations are generated in the distal arm 12, noise N is generated in the signal indicating the driving state of the motor 21A as compared with the signal indicating the drive instruction of the motor 21A. When the noise N is generated in the signal indicating the driving state, the correlation between the drive instruction of the motor 21A and the driving state of the motor 21A detected in the encoder 22A is low. On the other hand, when the distal arm 12 is not vibrating, the noise N is not generated in the signal indicating the driving state of the motor 21A. When the noise N is not generated in the signal indicating the driving state, the correlation between the drive instruction of the motor 21A and the driving state of the motor 21A detected in the encoder 22A is high. The frequency (f) of the vibrations of the distal arm 12 is detected in accordance with the generation of the noise N in the signal indicating the driving state of the motor 21A.

As the correlation between the drive instruction of (for) the motor 21A and the driving state of the motor 21A detected in the encoder 22A is higher, a correlation value P of the correlation data in the correlation data calculating section 47 is closer to 1. On the other hand, as the correlation between the drive instruction of the motor 21A and the driving state of the motor 21A detected in the encoder 22A is lower, the correlation value P of the correlation data in the correlation data calculating section 47 is closer to 0. That is, the correlation value P of the correlation data is closer to 1 when no vibrations are generated in the distal arm 12, and the correlation value P of the correlation data is closer to 0 when the distal arm 12 is greatly vibrating. As described above, the vibration state of the distal arm 12 is detected in accordance with the correlation data.

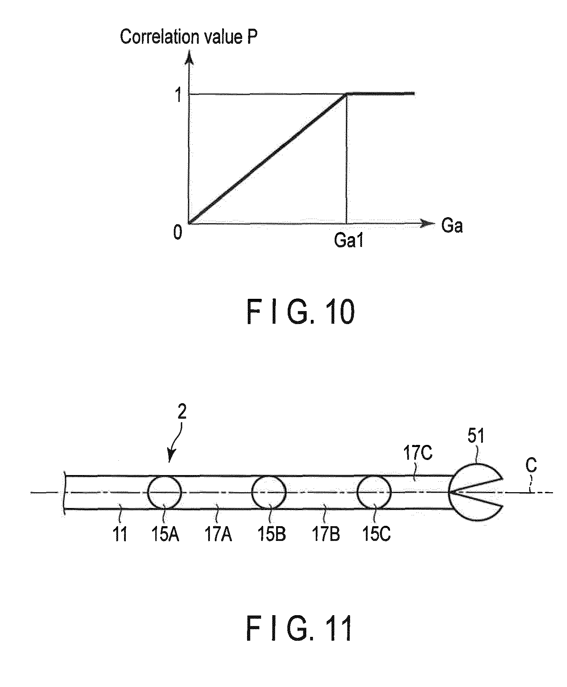

The correlation data stored in the data buffer 48 is output to the servo gain changing section 35. The servo gain changing section 35 is configured to change the servo gain Ga in the servo control section 27A in accordance with the correlation data. FIG. 10 is a diagram showing the relation between correlation data calculated by the correlation data calculating section 47 and the servo gain Ga in the servo control section 27A. As shown in FIG. 10, if the servo gain Ga of the servo control section 27A before changed is Ga1, the servo gain Ga after changed is equal to or more than Ga1 when the correlation value P of the correlation data is 1. On the other hand, if the correlation value P of the correlation data is less than 1, the servo gain Ga after changed is less than Ga1. As the correlation value P of the correlation data becomes closer to 0, the servo gain Ga after changed becomes smaller.

As described above, the servo gain Ga in the servo control section 27A is changed in accordance with the correlation data. Here, the predetermined time range T0 is reduced so that the correlation data indicating the correlation between the drive instruction of the motor 21A and the driving state of the motor 21A detected in the encoder 22A is calculated in real time in accordance with the vibration state of the distal arm 12. Therefore, the predetermined time range T0 is reduced so that the servo gain Ga of the servo control section 27A is changed in real time in accordance with the vibration state of the distal arm 12, and the frequency characteristics associated with the vibrations of the distal arm 12 change in real time.

The motors 21A to 21C and the encoders 22A to 22C are provided in the holding section 13 which is provided to the proximal direction side of the proximal end of the distal arm 12. Thus, the tubular section 11 and the distal arm 12 to be inserted into an inside of a body in a medical treatment are not increased in size.

Accordingly, the manipulator device 1 having the configuration described above has the following advantageous effects. That is, in the manipulator device 1, the vibration detection section 37 of each of the servo control sections 27A to 27C detects the vibration state of the distal arm 12 in accordance with the correlation between the drive instruction of the corresponding motor 21A, 21B or 21C and the driving state of the corresponding motor 21A, 21B or 21C detected by the corresponding encoder 22A, 22B or 22C. The servo gain changing section 35 of each of the servo control sections 27A to 27C then change the servo gains Ga, Gb or Gc in each of the servo control sections 27A to 27C in accordance with the vibration state of the distal arm 12. As the servo gain Ga, Gb or Gc of each of the servo control sections 27A to 27C is changed, the actuation characteristics of the corresponding joint 15A, 15B or 15C change. As a result of the change of the actuation characteristics of at least one of the joints 15A to 15C, the frequency characteristics of the distal arm 12 change, and the generated vibrations are inhibited (damped). Consequently, the frequency characteristics of the distal arm 12 change in real time in accordance with the vibration state of the distal arm 12, and the vibrations generated in the distal arm 12 can be quickly inhibited.

(Second Embodiment)

Now, a second embodiment of the present invention is described with reference to FIG. 11 to FIG. 13. It is to be noted that the same parts as the parts according to the first embodiment and parts having the same function are denoted by the same reference signs, and are not described.

FIG. 11 is a diagram showing a configuration of a distal arm 12 according to the present embodiment. As shown in FIG. 11, the distal arm 12 includes three joints 15A to 15C and three links 17A to 17C, as in the first embodiment. Instead of the scalpel (knife) 19, a grasping section 51 which is a distal treatment section is provided to the distal direction side of the link 17C. When actuated, the grasping section 51 can grasp a grasp target (treatment target) such as a living tissue.

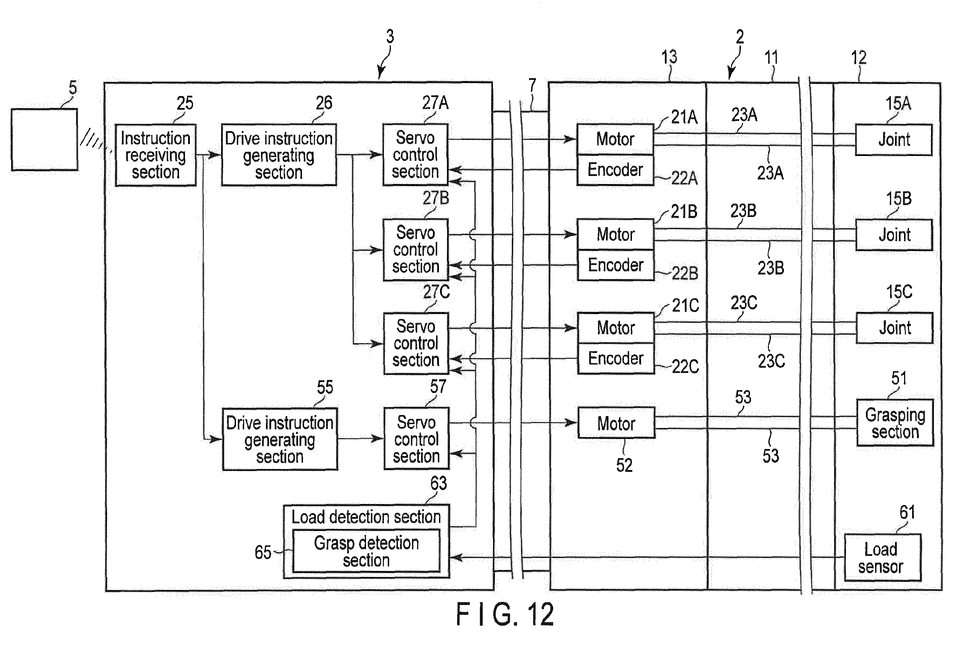

FIG. 12 is a diagram showing a configuration to actuate the joints 15A to 15C and the grasping section 51. As shown in FIG. 12, the drive instruction generating section 26 is configured to generate drive instruction of (for) each of the motors 21A to 21C in accordance with target position data and target posture data regarding the grasping section 51 (distal treatment section) included in an operational instruction, as in the first embodiment. The coordinate transformation based on the Denavit-Hartenberg method is used to generate the drive instruction of each of the motors 21A to 21C. The corresponding joint 15A, 15B or 15C is actuated in accordance with the driving state of each of the motors 21A to 21C. As a result, the distal arm 12 moves (acts).

In addition to the motors 21A to 21C, a motor 52 which is a driving member is provided in a holding section 13 of a manipulator 2. Wires 53 which are linear members are extended inside the manipulator 2 along a longitudinal axis C. The wires 53 are extended between the motor 52 and the distal arm 12. The distal ends of the wires 53 are connected to the grasping section 51. The wires 53 move along the longitudinal axis C in accordance with the driving state of the motor 52. The grasping section 51 is actuated by the movement of the wires 53 along the longitudinal axis C.

In addition to the drive instruction generating section 26, a drive instruction generating section 55 is provided in a control unit 3. The drive instruction generating section 55 is electrically connected to an instruction receiving section 25 of the control unit 3. The drive instruction generating section 55 is configured to detect the target position data and the target posture data regarding the grasping section 51 (distal treatment section) included in the operational instruction in an operational instruction input section 5. The drive instruction generating section 55 is then configured to generate a drive instruction of (for) the motor 52 in accordance with the target position data and the target posture data regarding the grasping section 51 included in the operational instruction. The drive instruction generating section 55 is electrically connected to a servo control section 57 provided in (to) the control unit 3. The drive instruction of the motor 52 is input to the servo control section 57 from the drive instruction generating section 55. The servo control section 57 is electrically connected to the motor 52, and supplies a drive current to the motor 52 in accordance with the drive instruction. Thus, the driving state of the motor 52 is controlled.

In the present embodiment, a load sensor 61 is provided to (in) the distal arm 12. The load sensor 61 is electrically connected to a load detection section 63 provided in the control unit 3. The load detection section 63 includes a grasp detection section 65. The load detection section 63 is electrically connected to servo control sections 27A to 27C and the servo control section 57. A processing in the load detection section 63 will be described later. In the present embodiment, the vibration detection section 37 is not provided in each of the servo control sections 27A to 27C. However, as in the first embodiment, each of the servo control sections 27A to 27C includes a driving position control section 31, a driving speed control section 32, a differential implementation section 33, and a servo gain changing section 35.

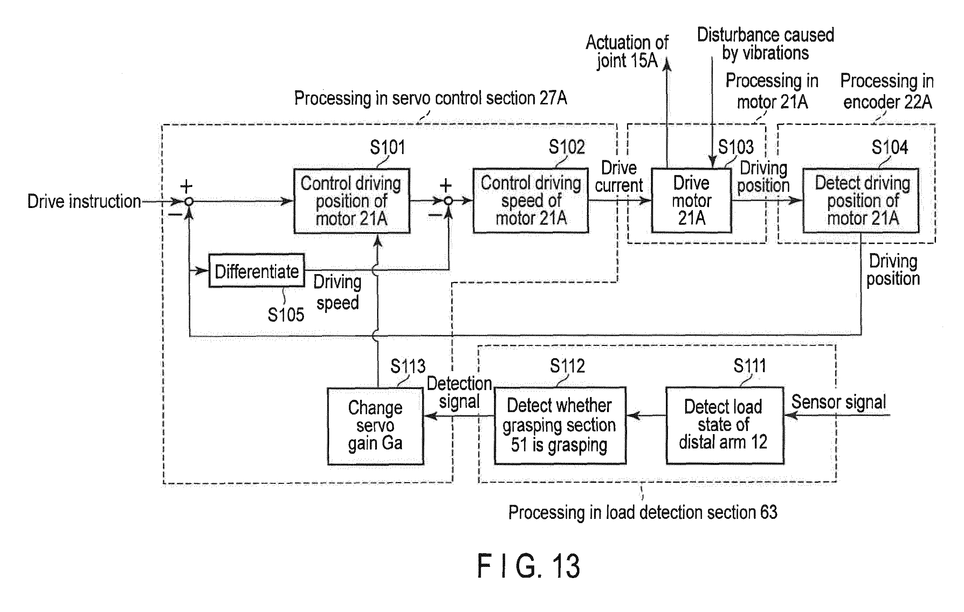

FIG. 13 is a diagram illustrating a processing in the servo control section 27A, the motor 21A, the encoder 22A, and the load detection section 63. Although one servo control section 27A, and the motor 21A and the encoder 22A which correspond to the servo control section 27A are only described below, the servo control sections 27B and 27C, the motors 21B and 21C, and the encoders 22B and 22C are similar in configuration and processing to the servo control section 27A, the motor 21A, and the encoder 22A.

As shown in FIG. 13, in the present embodiment, the driving position control section 31 is configured to control the driving position of the motor 21A in accordance with driving position data regarding the motor 21A included in the drive instruction, as in the first embodiment (step S101). The driving speed control section 32 is configured to control the driving speed of the motor 21A in accordance with driving speed data regarding the motor 21A included in the drive instruction (step S102). The drive current is supplied to the motor 21A in accordance with the control of the driving position of the motor 21A in the driving position control section 31 and the control of the driving speed of the motor 21A in the driving speed control section 32.

When the drive current is supplied to the motor 21A, the motor 21A is driven (step S103). Thus, the joint 15A is actuated. At this moment, the vibration state of the distal arm 12 affects the driving of the motor 21A as disturbance. The actual driving position (driving state) of the motor 21A is detected by the encoder 22A (step S104). The detected driving position information regarding the motor 21A is fed back in the driving position control (step S101) of the motor 21A in the driving position control section 31. The driving position information regarding the motor 21A detected by the encoder 22A is differentiated by the differential implementation section 33 (step S105), and the actual driving speed of the motor 21A is calculated. The detected driving speed information regarding the motor 21A is fed back in the driving speed control (step S102) of the motor 21A in the driving speed control section 32.

However, in the present embodiment, the vibration detection section 37 is not provided, in contrast with the first embodiment. In the present embodiment, the load sensor 61 is provided to the distal arm 12 instead, and a sensor signal from the load sensor 61 is input to the load detection section 63. The load detection section 63 is configured to detect a load state of the distal arm 12 in accordance with the sensor signal (step S111). That is, the load detection section 63 is a state detection section which is configured to detect the load state of the distal arm 12. In accordance with the load state of the distal arm 12, the grasp detection section 65 is configured to detect whether the grasp target is grasped in the grasping section 51 (step S112). For example, when the grasp target is grasped in the grasping section 51, the load which is exerted on the distal arm 12 is higher. On the other hand, when the grasp target is not grasped in the grasping section 51, the load which is exerted on the distal arm 12 is lower. A detection signal indicating the load state of the distal arm 12 and indicating whether the grasp target is grasped in the grasping section 51 is then generated.

The detection signal indicating the load state of the distal arm 12 is input to the servo gain changing section 35. The servo gain changing section 35 is configured to change a servo gain Ga of the drive current with respect to the drive instruction of the motor 21A in the servo control section 27A in accordance with the detection signal (step S113). The driving characteristics of the motor 21A with respect to (associated with) the drive instruction change in accordance with the change of the servo gain Ga. The actuation characteristics of the joint 15A change as a result of the change of the driving characteristics of the motor 21A. The actuation characteristics of the joints 15B and 15C are similar to the actuation characteristics of the joint 15A. That is, the actuation characteristics of the joint 15B change if a servo gain Gb of the drive current with respect to the drive instruction of the motor 21B in the servo control section 27B is changed. The actuation characteristics of the joint 15C change if a servo gain Gc of the drive current with respect to the drive instruction of the motor 21C in the servo control section 27C is changed. The frequency characteristics associated with the vibrations of the distal arm 12 change if the actuation characteristics of at least one of the joints 15A to 15C change. The relation between the servo gain Ga, Gb or Gc of each of the servo control sections 27A to 27C and the frequency characteristics of the distal arm 12 is as has been described above in the first embodiment (see FIG. 6A and FIG. 6B).

In the manipulator 2 which includes the grasping section 51 as the distal treatment section, the grasp target is grasped in the grasping section 51, and the grasp target is resected. In such a treatment, vibrations tend to be generated in the distal arm 12 when the grasp target is resected. Thus, in the present embodiment, the grasp detection section 65 detects whether the grasp target is grasped in the grasping section 51 in accordance with the load state of the distal arm 12. When the grasp target is grasped in the grasping section 51, at least one of the servo gains Ga to Gc of the servo control sections 27A to 27C is reduced. As a result, the frequency characteristics associated with the vibrations of the distal arm 12 change. Therefore, the generation of vibrations in the distal arm 12 is prevented when the grasp target grasped by the grasping section 51 is resected.

As described above, in the present embodiment, whether the grasp target is grasped in the grasping section 51 is detected from the load state of the distal arm 12. When the grasp target is grasped in the grasping section 51, the frequency characteristics of the distal arm 12 are changed. Thus, the generation of vibrations in the distal arm 12 is prevented when the grasp target grasped by the grasping section 51 is resected. That is, the frequency characteristics associated with the vibrations of the distal arm 12 change in real time in accordance with the load state of the distal arm 12, and the generation of vibrations in the distal arm 12 is prevented.

(Modification)

Although three joints 15A to 15C are provided in the embodiments described above, the present invention is not limited to this. For example, the number of joints (15A to 15C) may be two or may be four or more. The number of joints (15A to 15C) may be one. The motors (21A to 21C) which are driving members and the servo control sections (27A to 27C) have only to be provided with corresponding to each of the joints (15A to 15C).

The scalpel 19 is provided as the distal treatment section in the first embodiment, and the grasping section 51 is provided as the distal treatment section in the second embodiment. However, the present invention is not limited to this. For example, a hook-shaped section configured to hook and treat the treatment target may be provided as the distal treatment section (distal functioning section). Although the manipulator device 1 is a medical manipulator device, the manipulator device 1 may be an industrial manipulator device configured to be inserted into, for example, a conduit. In this case, an image pickup element is provided to the distal end portion of the distal arm 12 as the distal functioning section.

In the first embodiment, the servo gain (Ga, Gb or Gc) of each of the servo control sections (27A to 27C) is changed in accordance with the vibration state of the distal arm 12. In the second embodiment, the servo gain (Ga, Gb or Gc) of each of the servo control sections (27A to 27C) is changed in accordance with the load state of the distal arm 12. However, the present invention is not limited to this. For example, the configuration according to the first embodiment may be combined with the configuration according to the second embodiment so that the servo gain (Ga, Gb or Gc) of each of the servo control sections (27A to 27C) is changed in accordance with the vibration state of the distal arm 12 and the load state of the distal arm 12. That is, the state detection section (37, 63) which is configured to generate a detection signal indicating at least one of the vibration state and the load state of the distal arm 12 has only to be provided. In accordance with the detection signal in the state detection section (37, 63), the servo gain changing section 35 has only to change the servo gain (Ga, Gb or Gc) of the drive current with respect to the drive instruction in each of the servo control sections (27A to 27C). Then the servo gain (Ga, Gb or Gc) have only to be changed so that the frequency characteristics associated with the vibrations of the distal arm 12 change in real time in accordance with the vibration state or load state of the distal arm 12.

Incidentally, the present invention is not limited to the above embodiments and various modifications can naturally be made without deviating from the spirit and scope of the present invention.

**Claims**

1. A manipulator device comprising:

> a manipulator extended along a longitudinal axis, the manipulator including a distal arm movably provided at a distal end portion thereof, the distal arm including a distal functioning section at a distal end portion thereof;
> an operational instruction input section to which an operational instruction indicating a target position and a target posture of the distal functioning section is configured to be input;
> a driving member which is configured to be driven when a drive current is supplied thereto, and which is configured to move the distal arm when driven;
> a servo control section to which a drive instruction of the driving member is configured to be input in accordance with the operational instruction in the operational instruction input section, and which is configured to supply the drive current to the driving member in accordance with the drive instruction;
> a state detection section which is configured to detect, with time, at least one of a vibration state of the distal

EP 2 826 606 A1

arm and a load state of the distal arm, and which is configured to generate a detection signal indicating at least one of the vibration state and the load state of the distal arm; and

a servo gain changing section which is configured to change a servo gain of the drive current with respect to the drive instruction in the servo control section in accordance with the detection signal generated by the state detection section, the servo gain changing section being configured to change the servo gain so as to change frequency characteristics associated with the vibrations of the distal arm in real time in accordance with the vibration state or the load state of the distal arm.

2. The manipulator device according to claim 1, wherein the state detection section is a vibration detection section which is configured to detect a frequency of vibrations when the distal arm is vibrating, and

the servo gain changing section is configured to change the servo gain so as to change the frequency characteristics associated with the vibrations of the distal arm so that the vibrations are inhibited at the detected frequency.

3. The manipulator device according to claim 1, wherein the distal arm includes a joint, and a link extended in a part located to a distal direction side of the joint,

the distal functioning section is located to the distal direction side of the joint,

the driving member is configured to actuate the joint when driven, and configured to rotate a part of the distal arm located to the distal direction side of the joint about the joint by actuating the joint, and

the servo gain changing section is configured to change the servo gain so as to change actuation characteristics of the joint, and thereby configured to change the frequency characteristics associated with the vibrations of the distal arm.

4. The manipulator device according to claim 3, wherein the joint includes a plurality of joints,

the link includes a plurality of links each of which is extended in a part located to the distal direction side of the corresponding joint,

the distal functioning section is located to the distal direction side of the most- distal joint,

the driving member includes a plurality of driving members each of which is configured to actuate the corresponding joint when driven,

the servo control section includes a plurality of servo control sections, the drive instruction of the corresponding driving member being configured to be input to each of the servo control sections, and each of the servo control sections being configured to supply the drive current to the corresponding driving member in accordance with the drive instruction, and

the servo gain changing section includes a plurality of servo gain changing sections each of which is configured to change the servo gain of the drive current with respect to the drive instruction in the corresponding servo control section, and thereby each of which is configured to change the actuation characteristics of the corresponding joint.

5. The manipulator device according to claim 1, further comprising an encoder which is configured to detect a driving state of the driving member,

wherein the state detection section includes a correlation data calculating section which is configured to calculate, with time, correlation data indicating a correlation between the drive instruction of the driving member and the driving state of the driving member detected in the encoder, and the state detection section is a vibration detection section which is configured to detect the vibration state of the distal arm in accordance with the correlation data, and

the servo gain changing section is configured to change the servo gain in accordance with the correlation data.

6. The manipulator device according to claim 5, wherein the driving member and the encoder are located to a proximal direction side of a proximal end of the distal arm, and

the manipulator includes a linear member which is extended along the longitudinal axis between the driving member and the distal arm, and which is configured to move the distal arm by moving along the longitudinal axis in accordance with the driving state of the driving member.

7. The manipulator device according to claim 1, wherein the state detection section is a load detection section which is configured to detect the load state of the distal arm,

the distal arm includes a grasping section configured to grasp a grasp target,

the load detection section includes a grasp detection section which is configured to detect whether the grasp target is grasped in the grasping section in accordance with the load state of the distal arm, and

the servo gain changing section is configured to change the servo gain in accordance with whether the grasp target is grasped.

11

FIG. 1

FIG.2

FIG. 3

FIG. 4

F I G. 5

EP 2 826 606 A1

F I G. 6A

F I G. 6B

F I G. 7

EP 2 826 606 A1

Drive instruction generating section 26 | Drive instruction data | · · · · · · · · ·

Data buffer 42A | Drive instruction data | Drive instruction data | Drive instruction data | · · · · · · · · · ·

T0 ⌣ T0

Data buffer 45A | FFT data | FFT data | · · · · · · · · · ·

Data buffer 47 | Correlation data | Correlation data | · · · · · · · · · ·

Data buffer 45B | FFT data | FFT data | · · · · · · · · · ·

T0 ⌣ T0

Data buffer 42B | Driving state data | Driving state data | · · · · · · · · · ·

Encoder 22A | Driving state data | · · · · · · · · · ·

t

## F I G. 8

Drive instruction

Driving state

N

⊗

Correlation value P

1

0

t

## F I G. 9

18

Correlation value P

F I G. 10

F I G. 11

FIG. 12

2

3

5

12
- 15A Joint
- 15B Joint
- 15C Joint
- 51 Grasping section
- 61 Load sensor

11
- 23A 23A
- 23B 23B
- 23C 23C
- 53 53

13
- 21A Motor / 22A Encoder
- 21B Motor / 22B Encoder
- 21C Motor / 22C Encoder
- Motor 52

7

- 27A Servo control section
- 27B Servo control section
- 27C Servo control section
- 57 Servo control section
- 26 Drive instruction generating section
- 55 Drive instruction generating section
- 25 Instruction receiving section
- 63 Load detection section
- 65 Grasp detection section

F I G. 13

## INTERNATIONAL SEARCH REPORT

| International application No. |
|---|
| PCT/JP2012/080373 |

A.  CLASSIFICATION OF SUBJECT MATTER
*B25J13/08*(2006.01)i

According to International Patent Classification (IPC) or to both national classification and IPC

B.  FIELDS SEARCHED

Minimum documentation searched (classification system followed by classification symbols)
B25J13/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2010-240832 A  (Yaskawa Electric Corp.), 28 October 2010 (28.10.2010), entire text; fig. 1 to 5 & EP 2230053 A2 | 1-7 |
| A | JP 2008-15610 A  (Mitsubishi Electric Corp.), 24 January 2008 (24.01.2008), entire text; fig. 1 to 6 (Family: none) | 1-7 |
| A | JP 2000-222004 A  (Toshiba Machine Co., Ltd.), 11 August 2000 (11.08.2000), entire text; fig. 1 to 5 (Family: none) | 1-7 |

☒  Further documents are listed in the continuation of Box C.  ☐  See patent family annex.

| | |
|---|---|
| *       Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 14 December, 2012 (14.12.12) | 25 December, 2012 (25.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/080373

C (Continuation).    DOCUMENTS CONSIDERED TO BE RELEVANT

| Category* | Citation of document, with indication, where appropriate, of the relevant passages | Relevant to claim No. |
|---|---|---|
| A | JP 9-168987 A  (Tokico, Ltd.),<br>30 June 1997 (30.06.1997),<br>entire text; fig. 1 to 4<br>(Family: none) | 1-7 |
| A | JP 7-20941 A  (Fanuc Ltd.),<br>24 January 1995 (24.01.1995),<br>entire text; fig. 1 to 5<br>& US 5587638 A | 1-7 |
| A | JP 2011-182485 A  (Hitachi-GE Nuclear Energy, Ltd.),<br>15 September 2011 (15.09.2011),<br>entire text; fig. 1 to 17<br>(Family: none) | 1-7 |

Form PCT/ISA/210 (continuation of second sheet) (July 2009)

**EP 2 826 606 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011182485 A